# EUROPÄISCHE PATENTANMELDUNG

(11) **EP 0 840 314 A1**
(43) Veröffentlichungstag der Anmeldung: **06.05.1998**
(21) Anmeldenummer: 97118126.8
(22) Anmeldetag: 19.05.1995
(51) Int. Cl.: G11B 17/22

(54) **Wiedergabe- und/oder Aufzeichnungsgerät und/oder Ausgabegerät für als Informationsträger ausgebildete Platten**

(30) Priorität: 24.05.1994 DE 4418116
(62) Teilanmeldung aus: 95920729.1
(71) Anmelder: NSM AKTIENGESELLSCHAFT, 55411 Bingen (DE)
(72) Erfinder: Menke, Wilhelm, 55411 Bingen (DE); Heidersberger, Börge, 55411 Bingen (DE)
(74) Vertreter: Becker, Bernd, Dipl.-Ing.

(57) **Zusammenfassung**

Bei einem Wiedergabe- und/oder Aufzeichnungs- und/oder Ausgabegerät für Platten (1) mit gegenüberliegenden Plattenmagazinen (4), ist zwischen den Plattenmagazinen (4) eine Transporteinrichtung (10) zur Hin- und Herbeförderung eines Plattenhalters (7) mit der Platte (1) zwischen den Plattenmagazinen (4), zwischen einem Plattenmagazin (4) und einem Laufwerk (5) oder zwischen einem Plattenmagazin (4) oder einem Laufwerk (5) und einem Platten-Lade-/Ausgabe-Schubfach (11) angeordnet. Auf der Transporteinrichtung (10) befinden sich zwei horizontal verfahrbare Auszugeinrichtungen (9). Das Gerät soll bei einem einfachen und kompakten Aufbau äußerst vielseitig einsetzbar und variabel ausführbar sein und darüber hinaus kurze Beförderungswege eines Plattenhalters (7) mit einer Platte (1) gewährleisten. Zu diesem Zweck ist eines der gegenüberliegenden Plattenmagazine (4) vollständig durch einen Turm übereinanderliegender Laufwerke (5) ersetzt. Darüber hinaus kann unterhalb der Transporteinrichtung (10) ein Laufwerk (5) und/oder in der Vertikalachse eines der Plattenmagazine (4) mehrere Laufwerke (5) angeordnet werden.

## Beschreibung

Die Erfindung bezieht sich auf ein Wiedergabe- und/oder Aufzeichnungs- und/oder Ausgabegerät für als Informationsträger ausgebildete Platten, insbesondere CD-Platten, mit
- gegenüberliegenden Plattenmagazinen, die in horizontal übereinanderliegenden Aufnahmefächern Plattenhalter für mindestens eine Platte aufnehmen,
- einer zwischen den Plattenmagazinen angeordneten, rechnergesteuerten Transporteinrichtung zur wahlweisen Hin- und Herbeförderung eines einzelnen Plattenhalters mit der Platte zwischen beliebigen Aufnahmefächern, zwischen einem Aufnahmefach und mindestens einem Laufwerk zum Auslesen oder Einschreiben von Informationen von der bzw. auf die Platte oder zwischen einem Aufnahmefach oder einem Laufwerk und einem Platten-Lade/Ausgabe-Schubfach, und
- zwei auf der Transporteinrichtung horizontal verfahrbaren Auszugeinrichtungen für die Plattenhalter.

Aus der EP 0 138 005 B1 ist eine Plattenwechselvorrichtung bekannt, bei der zwischen zwei vertikalen, Plattenhüllen mit Platten speichernden Plattenmagazinen eine vertikal verfahrbare Plattenentnahmevorrichtung angeordnet ist, die einen auf dieser horizontal verfahrbaren Plattenhüllengreifer trägt. Dieser Plattenhüllengreifer ist mit zwei Greifeinrichtungen versehen, von denen sich wahlweise eine in ihrer Bereitschaftsposition in dem linken oder rechten Plattenmagazin befindet, während die andere Greifeinrichtung eine entnommene Plattenhülle in der Mittenposition hält, in der sich die Platte oberhalb des Plattentellers des Abspielgerätes befindet. Sonach kann immer nur eine Greifeinrichtung des Plattenhüllengreifers eine Bereitschaftsposition zur Herausnahme einer Plattenhülle aus dem zugeordneten Plattenmagazin einnehmen, d.h. wenn eine Plattenhülle aus dem anderen Plattenmagazin entnommen werden soll, dann muß zunächst der Plattenhüllengreifer in Richtung dieses Plattenmagazins verfahren werden, um die andere Greifeinrichtung in eine Bereitschaftsposition zur Herausnahme einer Plattenhülle aus dem ihr zugeordneten Plattenmagazin zu bringen, was einen zusätzlichen Verfahrweg des Plattenhüllengreifers darstellt, der die Transportzeit der die gewünschte Platte enthaltenden Plattenhülle von dem Plattenmagazin zu dem Plattenteller der Abspieleinheit erhöht.

Weiterhin offenbart die EP 0 280 263 A2 ein Plattenabspielgerät, bei dem die Platten in zwei Stapeln abgelegt werden und in zwei Abspielstationen abgespielt werden können. Die einzelnen Platten können von zwei Seiten abgespielt werden. Sie werden nach dem Abspielen nicht mehr in denselben Stapel zurückgelegt. Bei diesem Gerät ist ein unendliches Förderband als Auszugeinrichtung ausgebildet. Damit kann eine Platte ohne Wartezeit aus einem der beiden Magazine entnommen werden. Die Stellung der Auszugeinrichtung kann bei diesem Gerät nicht zur Kontrolle der Plattenposition herangezogen werden. Bei geringsten Unregelmäßigkeiten im Transport der Platten, beispielsweise bei der Abgabe der Platten aus dem Abspielgerät oder durch Erschütterungen der Anlage, sind daher empfindliche Störungen des Betriebes zu erwarten, die nicht hingenommen werden können.

Ferner zeigt die EP 0 439 483 B1 ein Plattenabspielgerät mit zwei einander gegenüberliegenden Plattenmagazinen mit einer in Stapelrichtung der Plattenmagazine bewegbaren Transporteinrichtung zur Hin- und Herbeförderung eines Plattenhalters mit einer Platte zwischen den Plattenmagazinen und einer Abspieleinheit und mit zwei unabhängig voneinander steuerbaren, auf der Transporteinrichtung horizontal verfahrbaren Auszugeinrichtungen mit jeweils einem ein- und ausfahrbaren Greifarm. Die unabhängig voneinander verfahrbaren Auszugeinrichtungen befinden sich jeweils in einer Bereitschaftsposition zur Herausnahme eines in dem zugeordneten Plattenmagazin vorhandenen Plattenhalters für eine Platte, oder die eine Auszugeinrichtung ist in eine Mittenposition gefahren, in der sie die aus dem zugehörigen Plattenmagazin entnommene Platte mit dem Plattenhalter konzentrisch zu dem Plattenteller der Abspieleinheit fixiert, während die andere Auszugeinrichtung in ihre Bereitschaftsposition für das andere Plattenmagazin verbleibt. Hieraus resultiert zwar ein relativ kurzer Beförderungsweg für eine einzelne Platte bzw. den zugehörigen Plattenhalter, jedoch muß beim Durchwechseln eines Plattenhalters von einem Plattenmagazin zum anderen Plattenmagazin die den Plattenhalter in die Mittenposition gebrachte Auszugeinrichtung in ihre Bereitschaftsposition zurückgefahren und die andere Auszugeinrichtung in die Mittenposition gefahren werden, welche dann erst den Plattenhalter in das andere Magazin befördern kann. Dies bedingt einen entsprechenden Zeitverlust.

Schließlich offenbart die WO-A-93/11 535 ein Wiedergabe- und/oder Aufzeichnungs- und/oder Ausgabegerät für als Informationsträger ausgebildete Platten, das zwei Plattenmagazine für Plattenhalter, eine Transporteinrichtung mit zwei horizontal verfahrbaren Auszugseinrichtungen, ein Laufwerk und ein Platten-Lade/Ausgabe-Schubfach enthält. Die Auszugseinrichtungen können jeweils wahlweise sowohl in der Bereitschaftsposition als auch in der Transporteinrichtungsposition in eine Eingriffsposition mit dem Plattenhalter gebracht werden.

Der Erfindung liegt die Aufgabe zugrunde, ein Wiedergabe- und/oder Aufzeichnungs- und/oder Ausgabegerät für als Informationsträger ausgebildete Platten der eingangs genannten Art zu schaffen, das bei einem einfachen und kompakten Aufbau äußerst vielseitig einsetzbar und variabel ausführbar ist und darüber hinaus kurze Beförderungswege eines Plattenhalters mit einer Platte gewährleistet.

Diese Aufgabe wird erfindungsgemäß dadurch gelöst, daß eines der gegenüberliegenden Plattenmagazine vollständig durch einen Turm übereinanderliegender Laufwerke ersetzt ist. Dadurch kann ein zeitlich unmittelbares Abspielen von Platten hintereinander, wie es z.B. in Diskotheken gefordert wird, ermöglicht werden. Des weiteren wird der Zugriff mehrerer Benutzer auf die Platten, die auch als CD-ROM-Platten ausgebildet sein können, gewährleistet. Hierbei kann gegebenenfalls unterhalb der Transporteinrichtung ein weiteres Laufwerk angeordnet sein.

Nach einer weiteren vorteilhaften Weiterbildung des Erfindungsgegenstandes ist das Platten-Lade/Ausgabe-Schubfach in der Vertikalachse eines der Plattenmagazine auswechselbar angeordnet, und diesem ist ein Ein/Ausgabeschacht für einen Plattenhalter mit einer Platte zugeordnet, wobei über das Plattenlade-/Ausgabe-Schubfach mittels der Transporteinrichtung entweder ein Plattenhalter mit der Platte zu einem der Laufwerke oder zu einem freien Aufnahmefach in einem der Plattenmagazine befördert oder eine in einem Plattenmagazin vorhandene Platte gegen eine andere Platte ausgetauscht werden kann. Zweckmäßigerweise bleibt hierbei bei einer Ausgabe einer Platte oder einem Austausch einer Platte gegen eine andere Platte mittels des Platten-Lade-/Ausgabe-Schubfaches in der ausgefahrenen Stellung des Platten-Lade-/Ausgabe-Schubfaches der Plattenhalter zwangsweise im Platten-Lade-/Ausgabe-Schubfach.

In einer Weiterbildung der Erfindung können zweckmäßigerweise auch mehrere Laufwerke in der Vertikalachse eines der Plattenmagazine übereinanderliegend auswechselbar angeordnet werden. Des weiteren ist es möglich, unterhalb der Transporteinrichtung ein Laufwerk oder unterhalb der Transporteinrichtung ein Laufwerk und in der Vertikalachse eines der Plattenmagazine mehrere Laufwerke anzuordnen. Auch kann eines der gegenüberliegenden Plattenmagazine vollständig durch einen Turm übereinanderliegender Laufwerke ersetzt werden.

Der der Erfindung zugrundeliegende Gedanke wird in der nachfolgenden Beschreibung anhand eines Ausführungsbeispieles, das in der Zeichnung dargestellt ist, näher erläutert. Es zeigt:

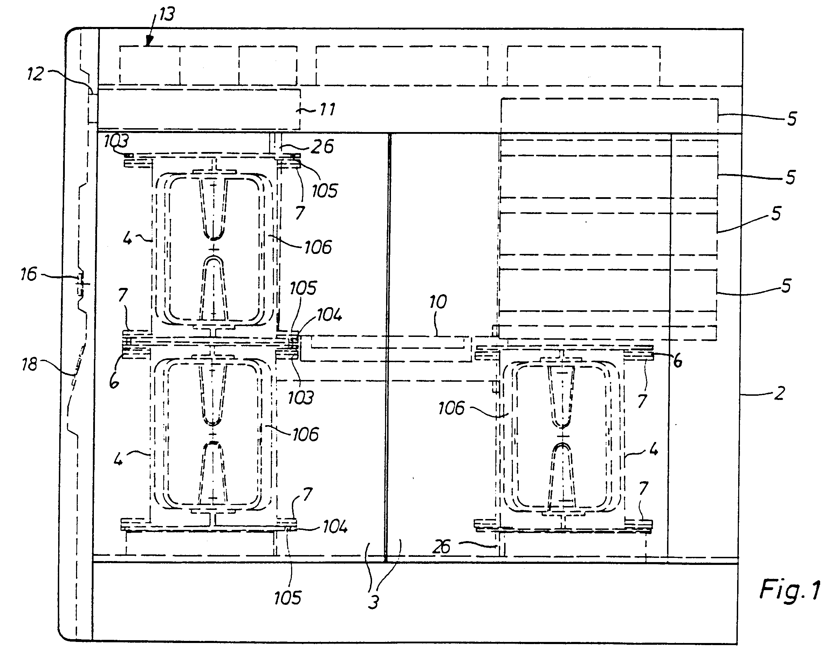

- Fig. 1: eine Vorderansicht eines Wiedergabe-Aufzeichnungs- und Ausgabegerätes für Platten nach der Erfindung,

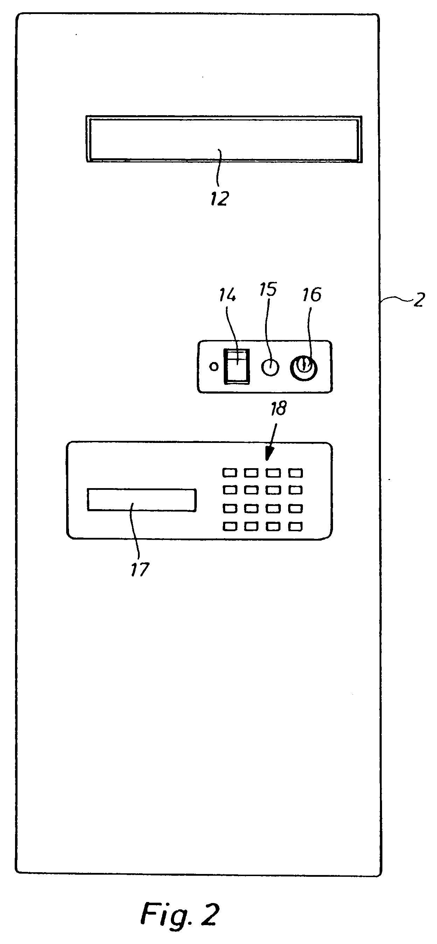

- Fig. 2: eine Seitenansicht des Gerätes nach Fig. 1
- Fig. 3 bis 5: alternative Ausführungen des Gerätes nach Fig. 1,
- Fig. 6: eine alternative Ausführung des Gerätes nach Fig. 1 mit nur einem der Transporteinrichtung seitlich zugeordneten Plattenmagazin und einem unterhalb der Transporteinrichtung angebrachten Laufwerk und
- Fig. 7 und 8: alternative Ausführungen der Darstellung nach Fig. 6.

Das Wiedergabe-/Aufzeichnungs- und Ausgabegerät für Platten 1 besitzt ein Gehäuse 2 mit einer an der Vorderseite angebrachten Doppel-Tür 3. Seitlich im unteren Bereich des Gehäuses 2 sind zwei gegenüberliegende Plattenmagazine 4 angeordnet. Oberhalb des linken Plattenmagazins 4 befindet sich ein weiteres auswechselbares Plattenmagazin 4, während oberhalb des rechten Plattenmagazins 4 ein Turm aus vier auswechselbaren Laufwerken 5 vorgesehen ist. Die Laufwerke 5 dienen zum Auslesen oder Einschreiben von Informationen von einer bzw. auf eine Platte 1.

Die untereinander identisch aufgebauten Plattenmagazine 4 weisen jeweils eine Vielzahl übereinanderliegend angeordneter Aufnahmefächer 6 für die Lagerung einer entsprechenden Anzahl an je eine Platte 1 aufnehmender Plattenhalter 7 auf. In dem Aufnahmefach 6 ist der Plattenhalter 7 durch zwei gegenüberliegende am Plattenmagazin 4 angebrachte Federelemente (nicht dargestellt) in seiner Lage gesichert. In dieser Lage steht der Plattenhalter 7 durch Freimachung der entsprechenden Seitenwand des Plattenmagazins 4 soweit über der Auszugseite des Plattenmagazins 4 vor, daß er von einer der beiden Auszugeinrichtungen 9 einer in dem Raum zwischen den Plattenmagazinen 4 und den Laufwerken 5 auf- und abverfahrbaren Transporteinrichtung 10 für den eine Platte 1 aufnehmenden Plattenhalter 7 erfaßt werden kann. Oberhalb der beiden linken Plattenmagazine 4 befindet sich ein Platten-Lade-/Ausgabe-Schubfach 11, dem seitlich ein Ein-/Ausgabeschacht 12 für einen Plattenhalter 7 mit einer Platte 1 zugeordnet und das ebenfalls von der Transporteinrichtung 10 bedienbar ist. In der ausgefahrenen Stellung des Platten-Lade-/Ausgabe-Schubfaches verbleibt der Plattenhalter 7 zwangsgesteuert in dem Schubfach 11, d.h. bei einer Ein- oder Ausgabe einer Platte 1 in das Schubfach 11 kann der Plattenhalter 7 nicht aus diesem entnommen werden. Sämtliche Funktionen des Gerätes werden über eine oberhalb des Platten-Lade-/Ausgabe-Schubfaches 11 angeordnete interne Rechnereinheit 13 gesteuert, die mit einem Ein-/Ausschalter 14, einem Türöffner 15, einem Schlüsselschalter 16, einem Display 17 und einem Bedientasten-Tableau 18 verbunden ist. Der interne Rechner 13 steuert und überwacht das gesamte Gerät und führt die Kommunikation mit dem externen Rechner durch.

Die beiden horizontal auf der Transporteinrichtung 10 verfahrbaren Auszugeinrichtungen 9 sind gleichzeitig relativ zueinander gegenläufig sich kreuzend bewegbar und zwar zwischen einer Bereitschaftsposition zur Herausnahme eines bestimmten Plattenhalters 7 mit der gewünschten Platte 1 aus dem entsprechenden Plattenmagazin 4 bzw. dem entsprechenden Laufwerk 5 bzw. aus dem Platten-Lade-/Ausgabe-Schubfach 11 und einer Transporteinrichtungsposition zur Herausnahme des Plattenhalters 7 aus der Transporteinrichtung 10. Sowohl in der Bereitschaftsposition als auch in der Transporteinrichtungsposition stehen beide Auszugeinrichtungen 9 nicht mit dem Plattenhalter 7 in Eingriff. In diesen Positionen können die Auszugeinrichtungen 9 jedoch jeweils wahlweise in eine Eingriffposition mit dem Plattenhalter 7 gebracht werden. Im hinteren Bereich des Gehäuses 2 befinden sich zwei parallel zueinander und vertikal verlaufende Führungsstangen 26, auf denen die Transporteinrichtung 10 gleitbeweglich gelagert ist.

Die in das Plattenmagazin 4 eingesetzten Plattenhalter 7 fluchten in die Deckenwand 103 und in die Bodenwand 104 eingelassene Einschnitte 105 des Plattenmagazins 4. Jedes Plattenmagazin 4 ist an der Vorderseite mit einem Tragbügel 106 versehen.

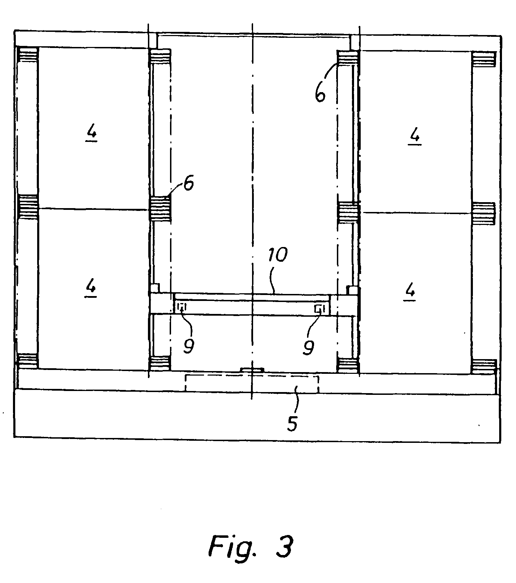

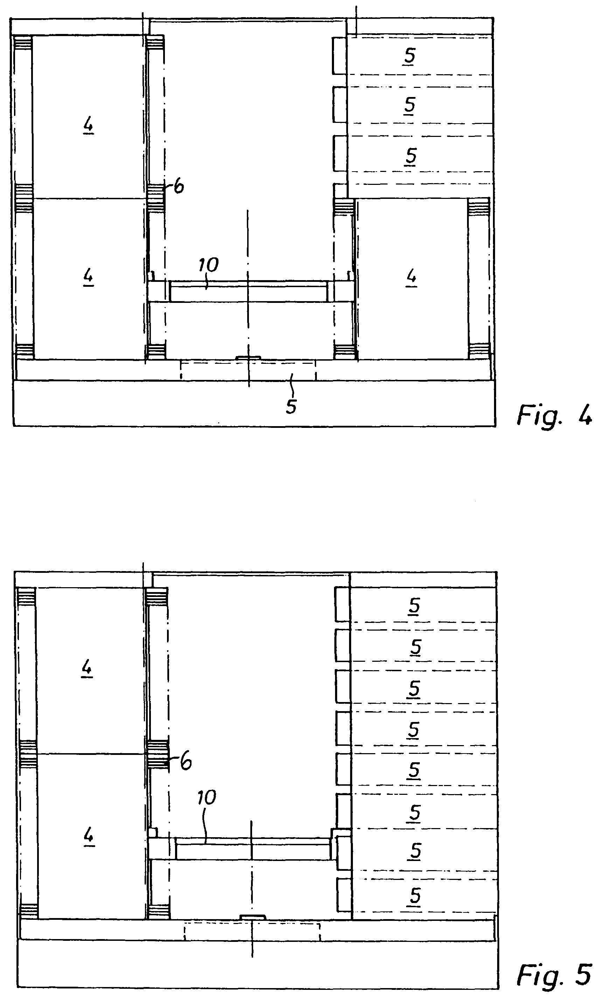

In den Fig. 3 bis 5 sind weitere Ausführungsformen des grundsätzlichen Aufbaus des Gerätes dargestellt. Bei der Ausführungsform nach Fig. 3 besitzt das Gerät jeweils rechts und links neben der Transporteinrichtung 10 zwei übereinanderliegende Plattenmagazine 4, wobei lediglich unterhalb der Transporteinrichtung 10 ein Laufwerk 5 angeordnet ist. Bei der Darstellung nach Fig. 4 sind neben der Transporteinrichtung 10 linksseitig zwei übereinanderliegende Plattenmagazine 4 und rechtsseitig ein Plattenmagazin 4 mit darüberliegenden Laufwerken 5 vorgesehen. Unterhalb der Transporteinrichtung 10 befindet sich ein weiteres Laufwerk 5. Die Ausführung nach Fig. 5 entspricht im wesentlichen derjenigen nach Fig. 4, wobei lediglich das rechtsseitige Plattenmagazin 4 durch weitere Laufwerke 5 ersetzt ist, d.h. den beiden linksseitigen Plattenmagazinen 4 liegt ein gleichhoher Turm aus übereinanderliegenden Laufwerken 5 gegenüber.

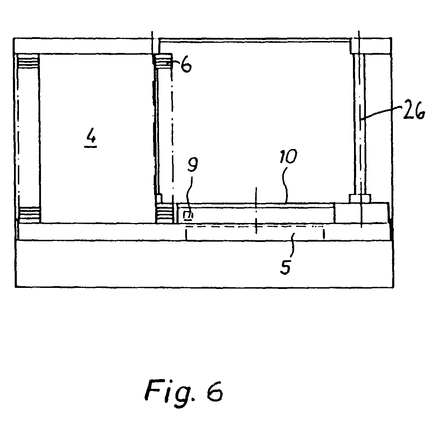

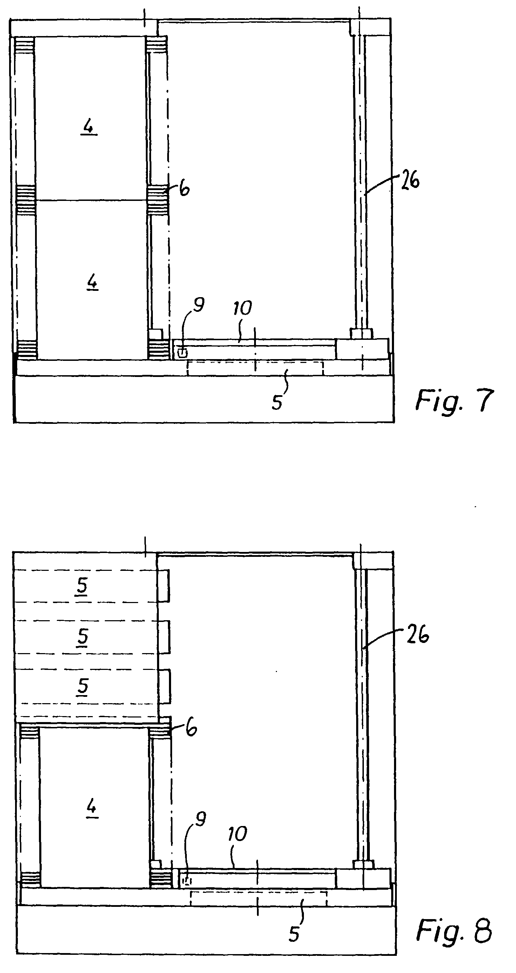

Die Figuren 6 bis 8 veranschaulichen alternative Ausführungsformen des Gerätes, bei denen auf der Transporteinrichtung 10 nur eine Auszugeinrichtung 9 horizontal verfahrbar ist, wobei dieser Auszugeinrichtung 9 einseitig neben der Transporteinrichtung 10 ein oder mehrere Plattenmagazine 4, ein oder mehrere Laufwerke 5 und/oder ein Platte-Lade-/Ausgabe-Schubfach 10 zugeordnet ist. Des weiteren kann sich unterhalb der Transporteinrichtung 10 noch ein weiteres Laufwerk 5 befinden. In diesen Fällen kann auf den Verdrehantrieb der Führungsstange 26 der Transporteinrichtung 10 verzichtet werden, wodurch sich insgesamt ein wesentlich einfacherer Aufbau des Steuermechanismus für die Auszugeinrichtung 9 ergibt.

## Patentansprüche

1. Wiedergabe- und/oder Aufzeichnungs- und/oder Ausgabegerät für als Informationsträger ausgebildete Platten (1), insbesondere CD-Platten, mit
- gegenüberliegenden Plattenmagazinen (4), die in horizontal übereinanderliegenden Aufnahmefächern (6) Plattenhalter (7) für mindestens eine Platte (1) aufnehmen,
- einer zwischen den Plattenmagazinen (4) angeordneten, rechnergesteuerten Transporteinrichtung (10) zur wahlweisen Hin- und Herbeförderung eines einzelnen Plattenhalters (7) mit der Platte (1) zwischen beliebigen Aufnahmefächern (6), zwischen einem Aufnahmefach (6) und mindestens einem Laufwerk (5) zum Auslesen oder Einschreiben von Informationen von der bzw. auf die Platte (1) oder zwischen einem Aufnahmefach (6) oder einem Laufwerk (5) und einem Platten-Lade/Ausgabe-Schubfach (11), und
- zwei auf der Transporteinrichtung (10) horizontal verfahrbaren Auszugeinrichtungen (9) für die Plattenhalter (7),
dadurch gekennzeichnet, daß eines der gegenüberliegenden Plattenmagazine (4) vollständig durch einen Turm übereinanderliegender, jeweils für sich auswechselbarer Laufwerke (5) ersetzt ist.

2. Wiedergabe- und/oder Aufzeichnungs- und/oder Ausgabegerät für als Informationsträger ausgebildete Platten nach Anspruch 1, dadurch gekennzeichnet, daß unterhalb der Transporteinrichtung (10) ein weiteres Laufwerk (5) angeordnet ist.

3. Wiedergabe- und/oder Aufzeichnungs- und/oder Ausgabegerät für als Informationsträger ausgebildete Platten nach Anspruch 1 oder 2, dadurch gekennzeichnet, daß das Platten-Lade-/Ausgabe-Schubfach (11) in der Vertikalachse eines der Plattenmagazine (4) auswechselbar angeordnet ist, und diesem ein Ein/Ausgabeschacht (12) für einen Plattenhalter (7) mit einer Platte (1) zugeordnet ist, wobei über das Platten-Lade-/Ausgabe-Schubfach (11) mittels der Transporteinrichtung (10) entweder ein Plattenhalter (7) mit der Platte (1) zu einem der Laufwerke (5) oder zu einem freien Aufnahmefach (6) in einem der Plattenmagazine (4) befördert oder eine in einem Plattenmagazin (4) vorhandene Platte (1) gegen eine andere Platte (1) ausgetauscht werden kann.

4. Wiedergabe- und/oder Aufzeichnungs- und/oder Ausgabegerät für als Informationsträger ausgebildete Platten nach einem der Ansprüche 1 bis 3, dadurch gekennzeichnet, daß bei einer Ausgabe einer Platte (1) oder einem Austausch einer Platte (1) gegen eine andere Platte (1) mittels des Platten-Lade-/Ausgabe-Schubfaches (11) in der ausgefahrenen Stellung des Platten-Lade-/Ausgabe-Schubfaches der Plattenhalter (7) zwangsweise im Platten-Lade-/Ausgabe-Schubfach (11) verbleibt.

5. Wiedergabe- und/oder Aufzeichnungs- und/oder Ausgabegerät für als Informationsträger ausgebildete Platten nach einem der Ansprüche 1 bis 4, dadurch gekennzeichnet, daß mehrere Laufwerke (5) in der Vertikalachse eines der Plattenmagazine (4) übereinanderliegend auswechselbar angeordnet sind.

6. Wiedergabe- und/oder Aufzeichnungs- und/oder Ausgabegerät für als Informationsträger ausgebildete Platten nach einem der Ansprüche 1 bis 5, dadurch gekennzeichnet, daß unterhalb der Transporteinrichtung (10) ein Laufwerk (5) angeordnet ist.

7. Wiedergabe- und/oder Aufzeichnungs- und/oder Ausgabegerät für als Informationsträger ausgebildete Platten nach einem der Ansprüche 1 bis 6, dadurch gekennzeichnet, daß unterhalb der Transporteinrichtung ein Laufwerk (5) und in der Vertikalachse eines der Plattenmagazine (4) mehrere Laufwerke (5) angeordnet sind.

8. Wiedergabe- und/oder Aufzeichnungs- und/oder Ausgabegerät für als Informationsträger ausgebildete Platten nach einem der Ansprüche 1 bis 9, dadurch gekennzeichnet, daß eines der gegenüberliegenden Plattenmagazine (4) vollständig durch einen Turm übereinanderliegender Laufwerke (5) ersetzt ist.
